# EUROPÄISCHE PATENTSCHRIFT

(11) **EP 3 338 160 B1**
(45) Veröffentlichungstag und Bekanntmachung des Hinweises auf die Patenterteilung: **23.01.2019**
(21) Anmeldenummer: 17787879.0
(22) Anmeldetag: 25.09.2017
(51) Int. Cl.: G06F 1/16, H05B 37/02

(54) **LICHTSTELLPULT MIT VERSTELLBAR GELAGERTEM BILDSCHIRMGEHÄUSE**
LIGHT CONTROL CONSOLE HAVING AN ADJUSTABLY MOUNTED SCREEN HOUSING
PUPITRE D'ÉCLAIRAGE POURVU D'UN BOÎTIER D'ÉCRAN MONTÉ DE MANIÈRE RÉGLABLE

(30) Priorität: 30.09.2016 DE 102016118597
(43) Veröffentlichungstag der Anmeldung: 27.06.2018
(73) Patentinhaber: MA Lighting Technology GmbH, 97297 Waldbüttelbrunn (DE)
(72) Erfinder: ADENAU, Michael, 97082 Würzburg (DE)
(74) Vertreter: advotec.
(86) Internationale Anmeldenummer: PCT/EP2017/074189
(87) Internationale Veröffentlichungsnummer: WO 2018/060122

(56) Entgegenhaltungen:
- DE-B3-102007 058 166
- DE-U1- 9 312 455
- DE-U1-202013 102 890
- US-A1- 2005 128 695
- US-A1- 2012 206 893

## Beschreibung

Die Erfindung betrifft ein Lichtstellpult mit einem am Konsolengehäuse verstellbar gelagerten Bildschirmgehäuse nach dem Oberbegriff des Anspruchs 1.

Gattungsgemäße Lichtstellpulte dienen zur Steuerung von Beleuchtungsanlagen, wie sie beispielsweise in Theatern oder Konzertbühnen zum Einsatz kommen. Diese Beleuchtungsanlagen umfassen regelmäßig eine Vielzahl von Beleuchtungseinrichtungen, beispielweise Bühnenscheinwerfer, wobei die Beleuchtungseinrichtungen vielfach auch noch für sich genommen zwischen einer Vielzahl von Beleuchtungszuständen, beispielsweise unterschiedlichen Farben, umgeschaltet werden können. Diese unterschiedlichen Beleuchtungszustände der jeweils an das Lichtstellpult angeschlossenen Beleuchtungseinrichtungen können durch programmierte Parameter im Beleuchtungsprogramm des Lichtstellpults gesteuert werden. Übliche Beleuchtungsanlagen können dabei bis zu mehrere Tausend Beleuchtungseinrichtungen umfassen. Um derart komplexe Beleuchtungsanlagen steuern zu können, sind die gattungsgemäßen Lichtstellpulte mit einem Digitalprozessor ausgestattet, der eine digitale Daten- und Signalverarbeitung erlaubt. Zur Speicherung der Steuerdaten ist regelmäßig ein Digitalspeicher vorgesehen, der es insbesondere ermöglicht, Beleuchtungsprogramme zu speichern bzw. zu archivieren. Zum Schutz der elektrischen und elektronischen Bauteile des Lichtstellpults sind die entsprechenden Komponenten in ein Konsolengehäuse eingebaut, das die elektrischen und elektronischen Komponenten des Lichtstellpults nach außen hin abschirmt.

Zur Programmierung des Beleuchtungsprogramms bzw. zur Steuerung des Beleuchtungsprogramms während eines Ablaufs müssen vom Bediener Bedienbefehle als Eingabewerte eingegeben werden. Dabei kann es sich beispielweise um die Auswahl einer bestimmten Beleuchtungseinrichtung bzw. um die Einstellung eines bestimmten Parameters handeln. Für die Eingabe dieser Bedienbefehle sind an bekannten Lichtstellpulten mechanische Bedienelemente, wie Taster, Drehregler (Encoder) oder Schieberegler, vorhanden, die an der Oberseite des Konsolengehäuses in einem Bedienfeld angeordnet sind. Die den einzelnen Bedienelementen zugeordneten Bedienbefehle können dabei durch geeignete Menüumschaltungen verändert werden, um entsprechend komplexe Beleuchtungsprogramme programmieren und steuern zu können.

Aus der DE 10 2007 058 166 B3 ist ein Lichtstellpult gemäß dem Oberbegriff des Anspruchs 1 bekannt.

Aus der US 2005/128695 A1 ist ein Laptoprechner mit einem Monitor bekannt, der mit einer Doppelschwenklagerung verstellbar am Rechnergehäuse gelagert ist.

Bei den bekannten Lichtstellpulten ist außerdem zumindest ein Bildschirm vorgesehen, um dem Bediener die Programmierung bzw. Steuerung des Lichtstellpults durch Anzeige entsprechender Bildinhalte zu ermöglichen bzw. zu erleichtern. Aus der US 7,821,781 B2 ist beispielsweise ein Lichtstellpult mit mehreren Bildschirmen bekannt. Die Bildschirme des Lichtstellpults sind dabei in einem eigenen Bildschirmgehäuse eingebaut. Das Bildschirmgehäuse ist mit einem Gelenk schwenkbar am Konsolengehäuse gelagert und kann um das Gelenk schwenkend relativ zum Konsolengehäuse verstellt werden. Bei diesem Lichtstellpult hat der Benutzer also die Möglichkeit durch Verschwenken des Bildschirmgehäuses relativ zum Konsolengehäuse einen bestimmten Blickwinkel auf die Bildschirme einzustellen.

Nachteilig an dem bekannten Lichtstellpult ist es jedoch, dass der Abstand zwischen den Bildschirmen einerseits und dem Bediener andererseits nur minimal und in einem sehr eingegrenzten Stellbereich entsprechend dem jeweils angestellten Stellwinkel verstellt werden kann.

Aufgabe der vorliegenden Erfindung ist es deshalb, ein Lichtstellpult vorzuschlagen, bei dem das Bildschirmgehäuse mit den darin verbauten Bildschirmen mit einer höheren Flexibilität relativ zum Konsolengehäuse verstellt werden kann. Insbesondere ist es die Aufgabe, dem Benutzer die Möglichkeit zu eröffnen, den Abstand zwischen dem Bedienfeld auf der Oberseite des Konsolengehäuses und den Bildschirmen im Bildschirmgehäuse frei zu variieren.

Diese Aufgabe wird durch ein Lichtstellpult nach der Lehre des Anspruchs 1 gelöst.

Vorteilhafte Ausführungsformen der Erfindung sind Gegenstand der Unteransprüche.

Das erfindungsgemäße Lichtstellpult beruht auf dem Grundgedanken, dass das Bildschirmgehäuse mit einer Doppelschwenklagerung verstellbar am Konsolengehäuse gelagert ist. Charakteristisch für die Doppelschwenklagerung ist es dabei, dass die Doppelschwenklagerung um eine erste Schwenkachse rotatorisch verstellbar mit dem Konsolengehäuse verbunden ist. Zugleich ist die Doppelschwenklagerung um eine zweite Schwenkachse rotatorisch verstellbar mit dem Bildschirmgehäuse verbunden. Im Ergebnis wird also durch die Doppelschwenklagerung erreicht, dass bei der Verstellung des Bildschirmgehäuses relativ zum Konsolengehäuse ein zusätzlicher Freiheitsgrad, nämlich eine zusätzliche Schwenkachse, realisiert wird. Das Bildschirmgehäuse selbst ist dabei nicht mehr unmittelbar mit dem Konsolengehäuse verbunden. Durch Verschwenken der Doppelschwenklagerung, bei der das Bildschirmgehäuse bzw. das Konsolengehäuse relativ zur Doppelschwenklagerung um die beiden Schwenkachsen verschwenkt wird, kann der Benutzer zum einen den Blickwinkel auf die Bildschirme im Bildschirmgehäuse entsprechend seinen persönlichen Wünschen einstellen. Zugleich kann aber die räumliche Zuordnung zwischen Bildschirmgehäuse und Konsolengehäuse verändert werden, um beispielsweise den Abstand zwischen dem Bedienfeld auf dem Konsolengehäuse und dem Bildschirm im Bildschirmgehäuse zu verändern.

Für den Einsatz des Lichtstellpults ist es von großer Bedeutung, dass das Bildschirmgehäuse nach der Einstellung durch den Benutzer in der eingestellten Lage verbleibt und insbesondere eine Verstellung des Bildschirmgehäuses unter Einfluss allein der auf das Bildschirmgehäuse wirkenden Schwerkraft ausgeschlossen ist. Um die Erhaltung der vom Benutzer eingestellten Stellwinkel zwischen Bildschirmgehäuse und Konsolengehäuse insbesondere auch unter Einfluss der Schwerkraft zu realisieren, ist es deshalb erfindungsgemäß vorgesehen, dass an der Doppelschwenklagerung zumindest eine Drehmomentbremse vorgesehen ist, die den Verstellbewegungen des Bildschirmgehäuses relativ zum Konsolengehäuse bremsend entgegenwirkt. Das Bremsmoment der Drehmomentbremse kann dabei insbesondere so gewählt werden, dass die von der Schwerkraft des Bildschirmgehäuses auf die Doppelschwenklagerung wirkenden Drehmomente von der Bremswirkung eliminiert werden und dadurch eine vom Benutzer unbeabsichtigte Verstellung des Bildschirmgehäuses ausgeschlossen ist.

Erfindungsgemäß ist die Drehmomentbremse auch in der Art einer Scheibenbremse ausgebildet. Die Bremsscheiben der Scheibenbremse werden dazu über ein Übersetzungsgetriebe durch Verstellung des Bildschirmgehäuses relativ zum Konsolengehäuse angetrieben, um die Relativgeschwindigkeit der Bremsscheiben zum feststehenden Bremsbelag zu erhöhen und dadurch die Bremswirkung auch bei kleinen Stellbewegungen entsprechend zu verbessern. Dies ist besonders dann von großem Vorteil, wenn auch auf der Vorderseite des Bildschirmgehäuses Bedienelemente, beispielsweise Taster, Schieberegler oder Drehregler, vorgesehen sind, weil der Benutzer dann den Abstand, den er zur Bedienung dieser Bedienelemente mit seiner Hand überwinden muss, individuell einstellen kann. Bei dem Bedienelement kann es sich auch um einen Touchscreen handeln, der zugleich als Bildschirm zur Anzeige von Ausgangsdaten dient.

Für die konstruktive Ausgestaltung der Doppelschwenklagerung zur Lagerung des Bildschirmgehäuses an dem Konsolengehäuse gibt es unterschiedlichste Möglichkeiten. Besonders einfach lässt sich die Doppelschwenklagerung unter Verwendung eines rechten und linken Schwenkarms realisieren. Beide Schwenkarme werden jeweils mit einem unteren Gelenk rotatorisch verstellbar am Konsolengehäuse befestigt und mit einem oberen Gelenk rotatorisch verstellbar am Bildschirmgehäuse befestigt. Im Ergebnis sind also die beiden Schwenkarme jeweils schwenkbar mit dem Konsolengehäuse und dem Bildschirmgehäuse verbunden. Durch Verschwenken der Schwenkarme relativ zum Konsolengehäuse und durch Verschwenken des Bildschirmgehäuses relativ zu den Schwenkarmen kann also zum einen der Blickwinkel des Benutzers auf die Bildschirme im Bildschirmgehäuse individuell eingestellt und zugleich die räumliche Zuordnung des Bildschirmgehäuses mit den daran gegebenenfalls vorgesehenen Bedienelementen relativ zur Bedienfläche des Konsolengehäuses eingestellt werden.

Ist die Doppelschwenklagerung unter Verwendung zweier Schwenkarme realisiert, so ist es besonders vorteilhaft, wenn die Stellbewegungen der beiden Schwenkarme miteinander synchronisiert werden, so dass beide Schwenkarme jeweils den gleichen Schwenkwinkel relativ zum Konsolengehäuse bzw. relativ zum Bildschirmgehäuse einnehmen. Diese Synchronisation zwischen den beiden Schwenkarmen kann in einfacher Weise dadurch realisiert werden, dass entweder die beiden unteren Gelenke des rechten Schwenkarms und des linken Schwenkarms und/oder die beiden oberen Gelenke des rechten Schwenkarms und des linken Schwenkarms mittels einer Verbindungsachse miteinander verbunden sind. Die Verbindungsachsen erstrecken sich dabei jeweils entweder entlang der ersten Schwenkachse oder entlang der zweiten Schwenkachse. Durch die Verbindungsachse wird die Schwenkbewegung des einen Schwenkarms jeweils auf den anderen Schwenkarm übertragen, so dass die beiden Schwenkarme nur noch synchron zueinander verstellt werden können. Besonders einfach kann dies beispielsweise dadurch erreicht werden, dass die Enden der Verbindungsachsen im Bereich der Gelenke mit den Enden der Schwenkarme verbunden, beispielsweise verschweißt, sind.

Für den Betrieb der Bildschirme im Bildschirmgehäuse ist es notwendig, dass Bildsignale vom Digitalprozessor des Lichtstellpults erzeugt und an die Bildschirmsteuerung übertragen werden. Um diese Signalübertragung zu ermöglichen, sind elektronische Signalleitungen zwischen dem Konsolengehäuse und dem Bildschirmgehäuse notwendig. Um die Verstellung des Bildschirmgehäuses relativ zum Konsolengehäuse durch die elektronischen Signalleitungen nicht zu behindern, ist es besonders vorteilhaft, wenn die Signalleitung an einem der Schwenkarme befestigt ist und auf diese Weise an der Verstellbewegung ohne Weiteres teilnimmt.

Weiterhin ist es besonders vorteilhaft, wenn die Signalleitungen entlang der Schwenkachsen durch die beiden Gelenke des zugeordneten Schwenkarms in das Konsolengehäuse und in das Bildschirmgehäuse verlaufen. Die auf die Signalleitung wirkende Torsion ist dabei regelmäßig so klein, dass diese durch die Elastizität der Signalleitung problemlos abgefangen werden kann, ohne dass es spezieller Kontakte, beispielweise Schleifkontakte, an den Schwenkachsen bedarf.

Um Beschädigungen an der Doppelschwenklagerung und insbesondere Beschädigungen an den Signalleitungen zwischen dem Konsolengehäuse und dem Bildschirmgehäuse durch übermäßiges Verschwenken der beiden Gehäuse relativ zueinander zu vermeiden, ist es besonders vorteilhaft, wenn an der Doppelschwenklagerung zumindest ein Endanschlag vorgesehen ist. Durch den Endanschlag bzw. durch die Anordnung mehrerer Endanschläge kann der maximale Schwenkweg der Verstellbewegung des Bildschirmgehäuses relativ zum Konsolengehäuse auf einen Wert < 360° begrenzt werden. Durch diese Begrenzung wird insbesondere ausgeschlossen, dass die Signalleitung zwischen Bildschirmgehäuse und Konsolengehäuse durch Überdrehen eines der beiden Gehäuse abgedreht wird.

Um den Komfort für den Benutzer bei der Einstellung des Bildschirmgehäuses relativ zum Konsolengehäuse zu erhöhen, kann gemäß einer bevorzugten Ausführungsform an der Doppelschwenklagerung zumindest ein Antriebsmotor vorgesehen werden, mit dem das Bildschirmgehäuse relativ zum Konsolengehäuse motorisch verstellbar ist. Der Antriebsmotor kann beispielsweise mit der Verbindungsachse zwischen zwei Schwenkarmen im Eingriff stehen, so dass durch die motorische Verstellung der Verbindungsachse die beiden Schwenkarme entsprechend verschwenkt werden.

Durch die zusätzlichen Verstellmöglichkeiten, die sich aus der erfindungsgemäßen Verwendung der Doppelschwenklagerung zwischen Konsolengehäuse und Bildschirmgehäuse ergeben, ist es außerdem möglich, mit dem Bildschirmgehäuse zusätzliche Funktionalitäten zum Schutz des Lichtstellpults zu realisieren. Dazu wird die Rückseite des Bildschirmgehäuses in der Art eines Deckels ausgebildet, wobei das Bildschirmgehäuse durch Verstellung der Doppelschwenklagerung in einer Verschlussstellung angeordnet werden kann, in der das Bedienfeld des Konsolengehäuses nach außen hin vom Bildschirmgehäuse abgedeckt wird. Befindet sich also das Bildschirmgehäuse in der Verschlussstellung, dient es zugleich als Deckel, mit dem das Bedienfeld des Lichtstellpults an der Oberseite des Konsolengehäuses nach außen hin geschützt wird. Durch Herausschwenken des Bildschirmgehäuses aus der Verschlussstellung kann das Lichtstellpult dann in seine eigentliche Betriebsstellung gebracht werden, in der die Beleuchtungsanlage programmiert bzw. gesteuert werden kann.

Soweit das Bildschirmgehäuse zusätzlich als Deckel des Lichtstellpults dient, sollte am Lichtstellpult zumindest eine Arretiereinrichtung vorgesehen werden, mit der das Bildschirmgehäuse in der Verschlussstellung, in der die Rückseite als Deckel dient, fixierbar ist. Auf diese Weise kann die Anordnung des Bildschirmgehäuses in der Verschlussstellung auch während des Transports des Lichtstellpults jederzeit gesichert werden, um eine ungewollte Verstellung des Bildschirmgehäuses aus der Verschlussstellung während des Transports des Lichtstellpults zuverlässig auszuschließen.

Soweit die Rückseite des Bildschirmgehäuses in der Anordnung des Bildschirmgehäuses in seiner Verschlussstellung auch als Deckel dient, ist es besonders vorteilhaft, wenn am Konsolengehäuse und/oder am Bildschirmgehäuse Abstandshalter vorgesehen sind. Durch diese Abstandshalter kann ein definierter Mindestabstand zwischen der Vorderseite des Bildschirmgehäuses und dem Bedienfeld des Konsolengehäuses gesichert werden, um Beschädigungen durch unerwünschten Kontakt zwischen der Vorderseite des Bildschirmgehäuses und dem Bedienfeld des Konsolengehäuses auszuschließen.

Besonders große Vorteile bietet das erfindungsgemäße Lichtstellpult mit den zusätzlichen Verstellmöglichkeiten der Doppelschwenklagerung, wenn die Bildschirme im Bildschirmgehäuse in der Art von berührungssensitiven Touchscreens ausgebildet sind. In diesem Fall dienen die Touchscreens nicht nur als Anzeigeeinrichtung, sondern zusätzlich auch als Eingabeelemente, an denen der Bediener Eingabebefehle eingeben kann. Bei dieser Doppelfunktion der Touchscreens als Anzeigeelemente einerseits und als Eingabeelemente andererseits ist es besonders bedeutsam, dass neben dem optimalen Blickwinkel auch eine optimale räumliche Anordnung der Touchscreens relativ zur Bedienfläche des Lichtstellpults vom Bediener eingestellt werden kann.

Eine Ausführungsform der Erfindung ist in den Zeichnungen schematisch dargestellt und wird nachfolgend beispielhaft erläutert.

Es zeigen:
- **Fig. 1**: ein Lichtstellpult mit einer Doppelschwenklagerung zwischen Konsolengehäuse und Bildschirmgehäuse;
- **Fig. 2**: das Lichtstellpult gemäß Fig. 1 bei Anordnung des Bildschirmgehäuses in einer ersten Betriebsstellung in seitlicher Ansicht;
- **Fig. 3**: das Lichtstellpult gemäß Fig. 2 bei Anordnung des Bildschirmgehäuses in einer zweiten Betriebsstellung in seitlicher Ansicht;
- **Fig. 4**: das Lichtstellpult gemäß Fig. 2 bei Anordnung des Bildschirmgehäuses in der Verschlussstellung in seitlicher Ansicht;
- **Fig. 5**: den rechten Schwenkarm des Lichtstellpults gemäß Fig. 1 in perspektivischer Ansicht von innen;
- **Fig. 6**: den Schwenkarm gemäß Fig. 5 nach Entfernung des Schwenkarmgehäuses in perspektivischer Ansicht von innen;
- **Fig. 7**: den Schwenkarm gemäß Fig. 6 in perspektivischer Ansicht von außen;
- **Fig. 8**: den Schwenkarm gemäß Fig. 7 nach Anbringung der Spannfederplatte in perspektivischer Ansicht von außen.

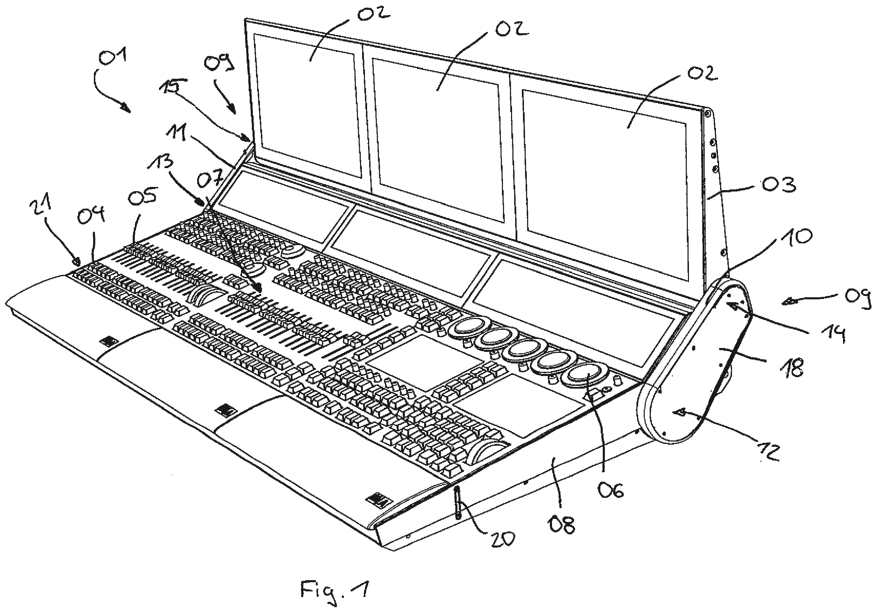

**Fig. 1** zeigt in perspektivischer Ansicht ein erfindungsgemäßes Lichtstellpult 01 zur Programmierung und Steuerung einer Beleuchtungsanlage. Das Lichtstellpult 01 ist mit drei Bildschirmen 02 zur Anzeige von diversen Menüs für den Benutzer ausgestattet. Die Bildschirme 02 sind ihrerseits in einem Bildschirmgehäuse 03 eingebaut.

Zur Eingabe von Stellbefehlen ist am Lichtstellpult 01 eine Vielzahl von Tastern 04, Schiebereglern 05 und Drehreglern (Encodern) 06 in einem Bedienfeld 07 an der Oberseite des Konsolengehäuses 08 vorgesehen. Zur verstellbaren Lagerung des Bildschirmgehäuses 03 am Konsolengehäuse 08 dient eine Doppelschwenklagerung 09. Die Doppelschwenklagerung ist dabei konstruktiv aus einem rechten Schwenkarm 10 und einem linken Schwenkarm 11 aufgebaut, wobei der rechte Schwenkarm 10 und der linke Schwenkarm 11 jeweils mittels eines unteren Gelenks 12 bzw. 13 und eines oberen Gelenks 14 bzw. 15 an dem Konsolengehäuse 08 bzw. an dem Bildschirmgehäuse 03 befestigt sind. An der Außenseite der Schwenkarme 10 und 11 ist jeweils eine Abdeckung 18 befestigt, die die innen liegende Mechanik und die im Inneren der Schwenkarme 10 und 11 verlaufenden Signalleitungen 23 schützt.

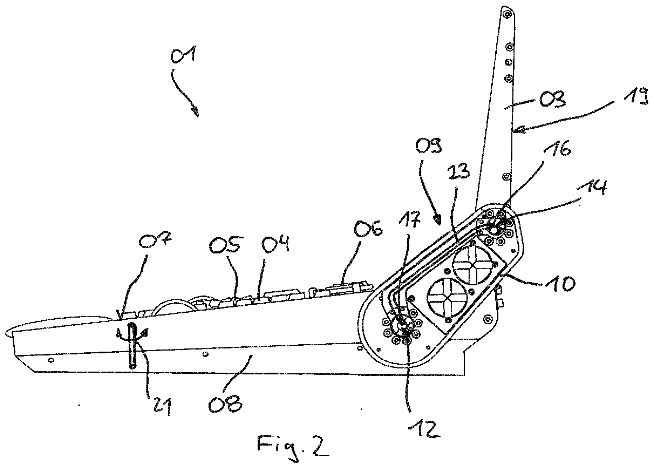

**Fig. 2** zeigt das Lichtstellpult 01 in einer ersten Betriebsstellung des Bildschirmgehäuses 03 relativ zum Konsolengehäuse 08. Die Abdeckung 18 ist zum besseren Verständnis in Fig. 2 bis 4 nicht dargestellt. Das Bildschirmgehäuse 03 und die Schwenkarme 10 und 11 können durch die Doppelschwenklagerung 09 zwischen Bildschirmgehäuse 03 und Konsolengehäuse 08 relativ zu den beiden Schwenkachsen 16 und 17 rotatorisch verstellt werden, um zum einen den Blickwinkel des Benutzers auf die Bildschirme 02 und zum anderen die relative Position der berührungssensitiven Oberfläche der Bildschirme 02 relativ zum Bedienfeld 07 individuell einstellen zu können.

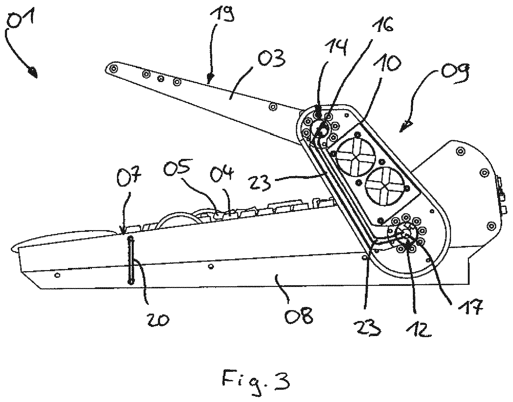

**Fig. 3** zeigt das Lichtstellpult 01 bei Anordnung des Bildschirmgehäuses 03 relativ zum Konsolengehäuse 08 in einer zweiten Betriebsstellung. In dieser Betriebsstellung deckt das Bildschirmgehäuse 03 das Bedienfeld 07 von oben beinahe vollständig ab, so dass die Benutzung des Lichtstellpults 01 allein durch Eingabe von Bedienbefehlen an den berührungssensitiven Bildschirmen 02 erfolgt.

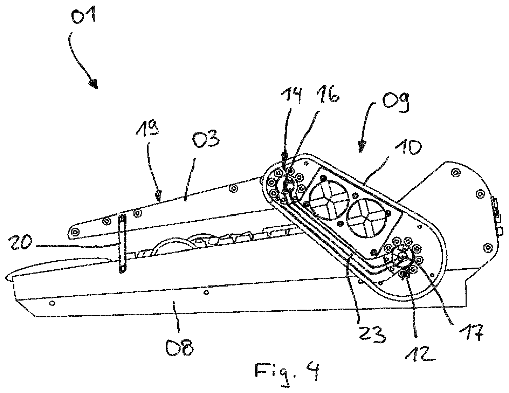

**Fig. 4** zeigt das Lichtstellpult 01 bei Anordnung des Bildschirmgehäuses 03 in der Verschlussstellung. Die Rückseite des Bildschirmgehäuses 03 ist dazu in der Art eines Deckels 19 ausgebildet, so dass das Bildschirmgehäuse 03, bei Anordnung in der in Fig. 4 dargestellten Verschlussstellung, die verschiedenen Bedienelemente des Lichtstellpults 01 gegen Beschädigungen schützt. Durch die Arretiereinrichtungen 20 und 21 kann das Bildschirmgehäuse 03 in der in Fig. 4 dargestellten Verschlussstellung fixiert werden, so dass der Schutz der Bedienelemente des Lichtstellpults 01 auch beim Transport des Lichtstellpults 01 jederzeit gewährleistet ist. In der Verschlussstellung wird ein Mindestabstand zwischen dem Bedienfeld 07 des Konsolengehäuses 08 und der Vorderseite des Bildschirmgehäuses 03 durch Endanschläge in der Doppelschwenklagerung 09 gesichert, um Berührungen und Beschädigungen der Bedienelemente 04, 05 und 06 auszuschließen.

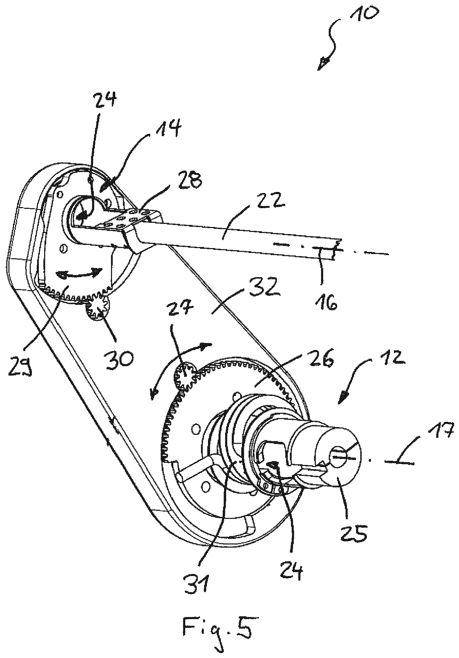

**Fig. 5** zeigt den rechten Schwenkarm 10 der Doppelschwenklagerung 09 des Lichtstellpults 01 in perspektivischer Ansicht von Innen. Das rechte obere Gelenk 14 und das in Fig. 5 nicht dargestellte linke obere Gelenk 15 werden durch eine Verbindungsachse 22 starr miteinander verbunden, so dass das rechte obere Gelenk 14 und das linke obere Gelenk 15 jeweils den exakt gleichen Schwenkwinkel einnehmen. Auf diese Weise wird eine erheblich größere Stabilität bei der Lagerung des Bildschirmgehäuses 03 erreicht. Um die an der Außenseite des Schwenkarms 10 verlaufende Signalleitung 23 (siehe Fig. 2 bis Fig. 4) ins Innere des Konsolengehäuses 08 bzw. ins Innere des Bildschirmgehäuses 03 verlegen zu können, sind an den Gelenken 12, 13, 14 und 15 jeweils Durchführungen 24 vorgesehen, die eine Kabeldurchführung der Signalleitung 23 erlauben.

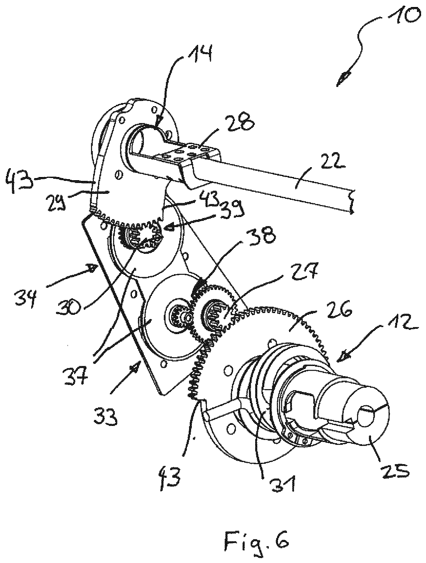

Zur Bildung des unteren Gelenks 12 dient ein mit dem Konsolengehäuse 08 befestigter Lagerbolzen 25, auf dem der Schwenkarm 10 schwenkbar gelagert ist. Am Lagerbolzen 25 oder am Konsolengehäuse 08 ist dabei zusätzlich ein Zahnradsegment 26 befestigt, das mit einem Antriebsritzel 27 einer Scheibenbremse verbunden ist. Die Funktion der Scheibenbremse wird nachfolgend anhand der Figuren 6 bis 8 noch näher erläutert.

Ein im Bildschirmgehäuse 03 fixierter Lagerbolzen 28 ist wiederum gelenkig im Schwenkarm 10 gelagert, wobei ein Zahnradsegment 29 am Lagerbolzen 28 oder am Bildschirmgehäuse 03 drehfest befestigt ist. Im Ergebnis realisiert also der Schwenkarm 10 eine Doppelschwenklagerung 09 dadurch, dass der Schwenkarm 10 zum einen auf dem Lagerbolzen 25 um die untere Schwenkachse 17 verschwenkt werden kann und zum anderen der Lagerbolzen 28 um die obere Schwenkachse 16 relativ zum Schwenkarm 10 verschwenkt werden kann.

Der Zahnradsegment 29 steht im Eingriff mit einem Antriebsritzel 30, das ebenfalls eine Scheibenbremse antreibt, wie nachfolgend näher erläutert wird.

Am Lagerbolzen 25 ist außerdem eine Gewichtsausgleichsfeder 31 vorgesehen, die das vom Eigengewicht des Bildschirmgehäuses bewirkte Drehmoment, das auf den Schwenkarm 10 wirkt und eine unerwünschte spontane Verstellung verursachen könnte, zumindest teilweise kompensiert. In der neutralen Stellung des Schwenkarms 10 bewirkt die Gewichtsausgleichsfeder 31 kein kompensierendes Drehmoment. Wird der Schwenkarm 10 dann zunehmend weiter ausgelenkt und dadurch vom Eigengewicht des Bildschirmgehäuses ein Drehmoment bewirkt, so wird dies durch die zunehmende Vorspannung der Gewichtsausgleichsfeder 31, die ebenfalls durch das Verschwenken des Schwenkarms 10 bewirkt wird, kompensiert.

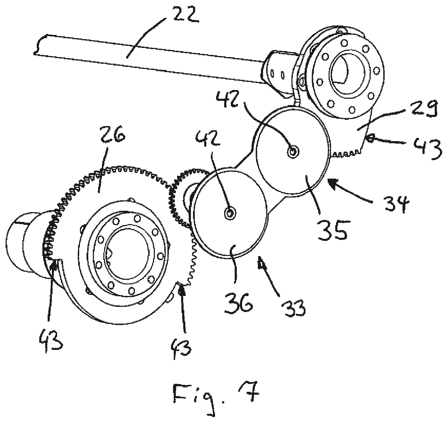

**Fig. 6** zeigt den Schwenkarm 10 nach Entfernung des Gehäuses 32. Man erkennt die beiden Scheibenbremsen 33 und 34, die im Inneren des Schwenkarms 10 verbaut sind. Die Antriebsritzel 27 und 30 treiben bei Verstellen des Schwenkarms 10 um die Schwenkachsen 16 bzw. 17 jeweils Bremsscheiben 35 bzw. 36 (siehe **Fig. 7**) an, die mit ihrer Innenseite auf einem feststehend gelagerten Bremsbelag 37 anliegen. Die Drehzahl der Bremsscheiben 35 und 36 wird dabei durch ein mehrstufiges Übersetzungsgetriebe 38 bzw. 39 erhöht.

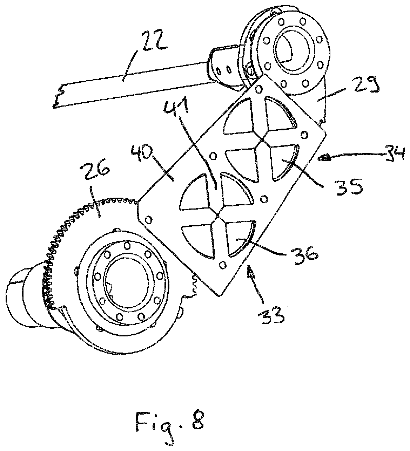

**Fig. 8** zeigt eine Federspannplatte 40, die auf der Außenseite der Bremsscheiben 35 und 36 befestigt wird. Die Federspannplatte 40 umfasst für die beiden Bremsscheiben 35 und 36 jeweils vier elastisch angelenkte Federarme 41. Die Federarme 41 drücken eine mittig in einer Kugelaufnahme 42 (siehe Fig. 7) aufgenommene Kugel, so dass durch die Vorspannung der Federarme 41 ein ausreichender Andruck zwischen den Bremsscheiben 35 bzw. 36 und dem Bremsbelag 37 bewirkt wird.

An den Zahnradsegmenten 26 bzw. 29 sind jeweils Endanschläge 43 vorgesehen, die an entsprechenden Anlageflächen im Gehäuse 32 des Schwenkarms 10 zur Anlage kommen können und dadurch die Verstellbewegung des Schwenkarms 10 relativ zum Konsolengehäuse 09 bzw. des Bildschirmgehäuses 03 relativ zum Schwenkarm 10 begrenzen.

## Patentansprüche

1. Lichtstellpult (01) zur Steuerung einer Beleuchtungsanlage, wobei im Lichtstellpult (01) digitale Stellbefehle erzeugt werden, die über Datenverbindungen an die Beleuchtungseinrichtungen der Beleuchtungsanlage übertragen werden können, und wobei das Lichtstellpult (01) zumindest einen Digitalprozessor und zumindest einen Digitalspeicher zur Erzeugung, Verwaltung und Speicherung der Stellbefehle umfasst, und wobei der Digitalprozessor und der Digitalspeicher in einem Konsolengehäuse (08) angeordnet sind, und wobei an der Oberseite des Konsolengehäuses (08) ein Bedienfeld (07) mit zumindest einem Bedienelement, insbesondere einem Taster (04) und/oder zumindest einem Schieberegler (05) und/oder zumindest einem Drehregler (06) vorgesehen ist, an dem Bedienbefehle vom Benutzer eingegeben werden können, und wobei das Lichtstellpult (01) zumindest einen Bildschirm (02) umfasst, und wobei der Bildschirm (02) in einem Bildschirmgehäuse (03) angeordnet ist,
**dadurch gekennzeichnet**
**dass** das Bildschirmgehäuse (03) mit einer Doppelschwenklagerung (09) verstellbar am Konsolengehäuse (08) gelagert ist, wobei die Doppelschwenklagerung (09) um eine erste Schwenkachse (17) rotatorisch verstellbar mit dem Konsolengehäuse (08) verbunden ist, und wobei die Doppelschwenklagerung (09) um eine zweite Schwenkachse (16) rotatorisch verstellbar mit dem Bildschirmgehäuse (03) verbunden ist, und wobei an der Doppelschwenklagerung (09) zumindest eine Drehmomentbremse vorgesehen ist, die den Verstellbewegungen des Bildschirmgehäuses (03) relativ zum Konsolengehäuse (08) bremsend entgegenwirkt, und wobei die Drehmomentbremse in der Art einer Scheibenbremse (33, 34) ausgebildet ist, und wobei die Bremsscheiben (35, 36) der Scheibenbremse (33, 34) über ein Übersetzungsgetriebe (38, 39) durch Verstellung des Bildschirmgehäuses (03) und/oder durch Verstellung der Schwenkarme (10, 11) relativ zum Konsolengehäuse (08) angetrieben werden.

2. Lichtstellpult nach Anspruch 1,
**dadurch gekennzeichnet,**
**dass** an der Vorderseite des Bildschirmgehäuses (03) zumindest ein Bedienelement (02), an dem Bedienbefehle vom Benutzer eingegeben werden können, angeordnet ist.

3. Lichtstellpult nach Anspruch 1 oder 2,
**dadurch gekennzeichnet,**
**dass** die Doppelschwenklagerung (09) einen rechten Schwenkarm (10) und einen linken Schwenkarm (11) umfasst, wobei der rechte Schwenkarm (10) mit einem unteren Gelenk (12) um die erste Schwenkachse (17) rotatorisch verstellbar an der rechten Seite des Konsolengehäuses (08) befestigt ist, und wobei der rechte Schwenkarm (10) mit einem oberen Gelenk (14) um die zweite Schwenkachse (16) rotatorisch verstellbar an der rechten Seite des Bildschirmgehäuses (03) befestigt ist, und wobei der linke Schwenkarm (11) mit einem unteren Gelenk (13) um die erste Schwenkachse (17) rotatorisch verstellbar an der linken Seite des Konsolengehäuses (08) befestigt ist, und wobei der linke Schwenkarm (11) mit einem oberen Gelenk (15) um die zweite Schwenkachse (16) rotatorisch verstellbar linken an der Seite des Bildschirmgehäuses (03) befestigt ist.

4. Lichtstellpult nach Anspruch 3,
**dadurch gekennzeichnet,**
**dass** das obere Gelenk (14) des rechten Schwenkarms (10) und das obere Gelenk (15) des linken Schwenkarms (11) mit einer Verbindungsachse (22), die sich entlang der zweiten Schwenkachse (16) durch das Bildschirmgehäuse (03) erstreckt, drehfest miteinander verbunden sind.

5. Lichtstellpult nach einem der Ansprüche 1 bis 4,
**dadurch gekennzeichnet,**
**dass** das Konsolengehäuse (08) und das Bildschirmgehäuse (03) durch eine elektronische Signalleitung (23) miteinander verbunden sind, wobei die Signalleitung (23) an oder in einem der Schwenkarme (10) verlegt ist.

6. Lichtstellpult nach Anspruch 5,
**dadurch gekennzeichnet,**
**dass** die Signalleitung (23) entlang der Schwenkachsen (16, 17) in Durchführungen (24) durch die beiden Gelenke (12, 14) des zugeordneten Schwenkarms (10) in das Konsolengehäuse (08) und in das Bildschirmgehäuse (03) verläuft.

7. Lichtstellpult nach einem der Ansprüche 1 bis 6,
**dadurch gekennzeichnet,**
**dass** an der Doppelschwenklagerung (09) zumindest ein Endanschlag (43) vorgesehen ist, der den maximalen Schwenkwinkel der Verstellbewegung des Bildschirmgehäuses (03) relativ zum Konsolengehäuse (08) auf einen Wert kleiner 360° begrenzt.

8. Lichtstellpult nach einem der Ansprüche 1 bis 7,
**dadurch gekennzeichnet,**
**dass** an der Doppelschwenklagerung (09) zumindest eine Gewichtsausgleichfeder (31) vorgesehen ist, die das vom Eigengewicht des Bildschirmgehäuses (03) bewirkte Drehmoment zumindest teilweise kompensiert.

9. Lichtstellpult nach einem der Ansprüche 1 bis 8,
**dadurch gekennzeichnet,**
**dass** an der Doppelschwenklagerung zumindest ein Antriebsmotor vorgesehen ist, mit dem das Bildschirmgehäuse relativ zum Konsolengehäuse motorisch verstellbar ist.

10. Lichtstellpult nach einem der Ansprüche 1 bis 9,
**dadurch gekennzeichnet,**
**dass** die Rückseite des Bildschirmgehäuses (03) in der Art eines Deckels (19) ausgebildet ist, wobei das Bildschirmgehäuse (03) in einer Verschlussstellung, in der das Bedienfeld (07) des Konsolengehäuses (08) nach außen abgedeckt wird, anordenbar ist.

11. Lichtstellpult nach Anspruch 10,
**dadurch gekennzeichnet,**
**dass** am Lichtstellpult (01) zumindest eine Arretiereinrichtung (20, 21) vorgesehen ist, mit der das Bildschirmgehäuse (03) in der Verschlussstellung fixierbar ist.

12. Lichtstellpult nach Anspruch 10 oder 11,
**dadurch gekennzeichnet,**
**dass** am Konsolengehäuse und/oder am Bildschirmgehäuse Abstandshalter vorgesehen sind, die das Bildschirmgehäuse in der Verschlussstellung in einem definierten Abstand über dem Bedienfeld des Konsolengehäuses halten.

13. Lichtstellpult nach einem der Ansprüche 1 bis 12,
**dadurch gekennzeichnet,**
**dass** der Bildschirm im Bildschirmgehäuse in der Art eines berührungssensitiven Touch-Screens ausgebildet ist.

## Claims

1. A lighting control console (01) for controlling a lighting system, digital adjusting commands being generated in the lighting control console (01), which commands can be transmitted to the lighting devices of the lighting system via data links, and said lighting control console (01) comprising at least one digital processor and at least one digital memory for generating, managing and storing the adjusting commands, and said digital processor and said digital memory being arranged in a console housing (08), and a control panel (07) having at least one control element, in particular a key button (04) and/or at least one slide control (05) and/or at least one rotary control, being provided at the upper side of the console housing (08), which control panel allows users to enter control commands, and said lighting control console (01) comprising at least one screen (02), and said screen (02) being arranged in a screen housing (03),
**characterised in that**
the screen housing (03) is mounted, with the aid of a double pivot bearing (09), at the console housing (08) so as to be adjustable, wherein said double pivot bearing (09) is linked to the console housing (08), being rotationally adjustable about a first pivot axis (17), and wherein said double pivot bearing (09) is linked to the screen housing (03), being rotationally adjustable about a second pivot axis (16), and wherein at least one torque brake, which counteracts the adjusting movements of the screen housing (03) in relation to the console housing (08) in a decelerating fashion, is provided at the double pivot bearing (09), and wherein the torque brake is embodied in the manner of a disc brake (33, 34), and wherein the brake discs (35, 36) of the disc brake (33, 34) are driven via a transmission gearing (38, 39) by adjusting the screen housing (03) and/or by adjusting the pivot arms (10, 11) in relation to the console housing (08).

2. The lighting control console according to claim 1,
**characterised in that**
at least one control element (02) which allows users to enter control commands is arranged at the front of the screen housing (03).

3. The lighting control console according to claim 1 or 2,
**characterised in that**
the double pivot bearing (09) comprises a right pivot arm (10) and a left pivot arm (11), wherein the right pivot arm (10), with the aid of a lower articulation (12), is fastened to the right side of the console housing (08), being rotationally adjustable about the first pivot axis (17), and wherein the right pivot arm (10), with the aid of an upper articulation (14), is fastened to the right side of the screen housing (03), being rotationally adjustable about the second pivot axis (16), and wherein the left pivot arm (11), with the aid of a lower articulation (13), is fastened to the left side of the console housing (08), being rotationally adjustable about the first pivot axis (17), and wherein the left pivot arm (11), with the aid of an upper articulation (15), is fastened to the left side of the screen housing (03), being rotationally adjustable about the second pivot axis (16).

4. The lighting control console according to claim 3,
**characterised in that**
the upper articulation (14) of the right pivot arm (10) and the upper articulation (15) of the left pivot arm (11) are linked to each other for co-rotation by means of a linkage axis (22) which extends along the second pivot axis (16) through the screen housing (03).

5. The lighting control console according to any one of the claims 1 to 4,
**characterised in that**
the console housing (08) and the screen housing (03) are linked to each other by way of an electronic signal line (23), wherein the signal line (23) is laid at or in one of the pivot arms (10).

6. The lighting control console according to claim 5,
**characterised in that**
the signal line (23) runs along the pivot axes (16, 17) in ducts (24) through the two articulations (12, 14) of the assigned pivot arm (10) into the console housing (08) and into the screen housing (03).

7. The lighting control console according to any one of the claims 1 to 6,
**characterised in that**
at least one end stop (43) which limits the maximum pivot angle of the adjusting movement of the screen housing (03) in relation to the console housing (08) to a value smaller than 360° is provided at the double pivot bearing (09).

8. The lighting control console according to any one of the claims 1 to 7,
**characterised in that**
at least one weight compensation spring (31) is provided at the double pivot bearing (09), said spring at least partially compensating the torque brought about by the dead load of the screen housing (03).

9. The lighting control console according to any one of the claims 1 to 8,
**characterised in that**
at least one drive motor is provided at the double pivot bearing, said drive motor permitting the screen housing to be adjusted in relation to the console housing in a motor-driven fashion.

10. The lighting control console according to any one of the claims 1 to 9,
**characterised in that**
the back of the screen housing (03) is embodied in the manner of a lid (19), wherein the screen housing (03) can be arranged in a closed position in which the control panel (07) of the console housing (08) is covered towards the outside.

11. The lighting control console according to claim 10,
**characterised in that**
at least one retaining device (20, 21) is provided at the lighting control console (01), said device making it possible to fix the screen housing (03) in the closed position.

12. The lighting control console according to claim 10 or 11,
**characterised in that**
spacers are provided at the console housing and/or at the screen housing, said spacers keeping the screen housing, in the closed position, at a defined distance above the control panel of the console housing.

13. The lighting control console according to any one of the claims 1 to 12,
**characterised in that**
the screen in the screen housing is embodied in the manner of a touch-sensitive touch screen.

## Revendications

1. Pupitre de commande d'éclairage (01) pour commander un système d'éclairage, des instructions de réglage numériques qui peuvent être transmises aux dispositifs d'éclairage du système d'éclairage par des liaisons de données étant générées dans le pupitre de commande d'éclairage (01), et ledit pupitre de commande d'éclairage (01) comprenant au moins un processeur numérique et au moins une mémoire numérique pour générer, gérer et stocker les instructions de réglage, et ledit processeur numérique et ladite mémoire numérique étant disposés dans un boîtier de console (08), et un panneau de commande (07) ayant au moins un élément de commande, en particulier un bouton poussoir (04) et/ou au moins un curseur (05) et/ou au moins un bouton rotatif (06), étant prévu sur le côté supérieur du boîtier de console (08), les utilisateurs pouvant entrer des instructions de commande audit panneau de commande, et ledit pupitre de commande d'éclairage (01) comprenant au moins un écran (02), et ledit écran (02) étant disposé dans un boîtier d'écran (03),
**caractérisé en ce que**
le boîtier d'écran (03) est monté, à l'aide d'un palier de pivotement double (09), au boîtier de console (08) de manière ajustable, dans lequel ledit palier de pivotement double (09) est relié avec le boîtier de console (08), étant ajustable de manière rotative autour d'un premier axe de pivotement (17), et dans lequel ledit palier de pivotement double (09) est relié avec le boîtier d'écran (03), étant ajustable de manière rotative autour d'un deuxième axe de pivotement (16), et dans lequel au moins un frein de couple est prévu au palier de pivotement double (09), le frein de couple agissant de manière freinante dans le sens contraire aux mouvements d'ajustage du boîtier d'écran (03) par rapport au boîtier de console (08), et dans lequel le frein de couple est réalisé à la manière d'un frein à disque (33, 34), et dans lequel les disques de frein (35, 36) du frein à disque (33, 34) sont entraînés par un engrenage de transmission (38, 39) en ajustant le boîtier d'écran (03) et/ou en ajustant les bras de pivotement (10, 11) par rapport au boîtier de console (08).

2. Pupitre de commande d'éclairage selon la revendication 1,
**caractérisé en ce qu'**
au moins un élément de commande (02) est disposé à la face avant du boîtier d'écran (03), les utilisateurs pouvant entrer des instructions de commande audit élément de commande.

3. Pupitre de commande d'éclairage selon la revendication 1 ou 2,
**caractérisé en ce que**
le palier de pivotement double (09) comprend un bras de pivotement (10) droit et un bras de pivotement (11) gauche, dans lequel ledit bras de pivotement (10) droit, à l'aide d'une articulation (12) inférieure, est attaché au côté droit du boîtier de console (08), étant ajustable de manière rotative autour du premier axe de pivotement (17), et dans lequel ledit bras de pivotement (10) droit, à l'aide d'une articulation (14) supérieure, est attaché au côté droit du boîtier d'écran (03), étant ajustable de manière rotative autour du deuxième axe de pivotement (16), et dans lequel le bras de pivotement (11) gauche, à l'aide d'une articulation (13) inférieure, est attaché au côté gauche du boîtier de console (08), étant ajustable de manière rotative autour du premier axe de pivotement (17), et dans lequel le bras de pivotement (11) gauche, à l'aide d'une articulation (15) supérieure, est attaché au côté gauche du boîtier d'écran (03), étant ajustable de manière rotative autour du deuxième axe de pivotement (16).

4. Pupitre de commande d'éclairage selon la revendication 3,
**caractérisé en ce que**
l'articulation (14) supérieure du bras de pivotement (10) droit et l'articulation (15) supérieure du bras de pivotement (11) gauche sont reliées de manière solidaire en rotation à l'aide d'un axe de liaison (22) qui s'étend le long du deuxième axe de pivotement (16) au travers du boîtier d'écran (03).

5. Pupitre de commande d'éclairage selon l'une quelconque des revendications 1 à 4,
**caractérisé en ce que**
le boîtier de console (08) et le boîtier d'écran (03) sont reliés par une ligne de signaux (23) électronique, dans lequel la ligne de signaux (23) est posée à ou dans l'un des bras de pivotement (10).

6. Pupitre de commande d'éclairage selon la revendication 5,
**caractérisé en ce que**
la ligne de signaux (23) passe le long des axes de pivotement (16, 17) dans des conduites (24) au travers des deux articulations (12, 14) du bras de pivotement (10) associé, entrant dans le boîtier de console (08) et dans le boîtier d'écran (03).

7. Pupitre de commande d'éclairage selon l'une quelconque des revendications 1 à 6,
**caractérisé en ce qu'**
au moins une butée finale (43) qui limite l'angle de pivotement maximal du mouvement d'ajustage du boîtier d'écran (03) par rapport au boîtier de console (08) à une valeur inférieure à 360° est prévue au palier de pivotement double (09).

8. Pupitre de commande d'éclairage selon l'une quelconque des revendications 1 à 7,
**caractérisé en ce qu'**
au moins un ressort de compensation du poids (31) est prévu au palier de pivotement double (09), ledit ressort de compensation du poids compensant le couple produit par le poids propre du boîtier d'écran (03) au moins en partie.

9. Pupitre de commande d'éclairage selon l'une quelconque des revendications 1 à 8,
**caractérisé en ce qu'**
au moins un moteur d'entraînement est prévu au palier de pivotement double, ledit moteur d'entraînement permettant au boîtier d'écran d'être ajusté par rapport au boîtier de console par moteur.

10. Pupitre de commande d'éclairage selon l'une quelconque des revendications 1 à 9,
**caractérisé en ce que**
le derrière du boîtier d'écran (03) est réalisé à la manière d'un couvercle (19), dans lequel le boîtier d'écran (03) peut être disposé dans une position fermée dans laquelle le panneau de commande (07) du boîtier de console (08) est couvert vers l'extérieur.

11. Pupitre de commande d'éclairage selon la revendication 10,
**caractérisé en ce qu'**
au moins un dispositif d'arrêt (20, 21) est prévu au pupitre de commande d'éclairage (01), le boîtier d'écran (03) pouvant être fixé dans la position fermée à l'aide dudit dispositif d'arrêt.

12. Pupitre de commande d'éclairage selon la revendication 10 ou 11,
**caractérisé en ce que**
des espaceurs sont prévus au boîtier de console et/ou au boîtier d'écran, lesdits espaceurs maintenant le boîtier d'écran, dans la position fermée, à une distance définie au-dessus du panneau de commande du boîtier de console.

13. Pupitre de commande d'éclairage selon l'une quelconque des revendications 1 à 12,
**caractérisé en ce que**
l'écran dans le boîtier d'écran est réalisé à la manière d'un écran tactile qui est sensible au contact.
